# EUROPEAN PATENT SPECIFICATION

(11) **EP 2 474 242 B1**
(45) Date of publication and mention of the grant of the patent: **16.04.2014**
(21) Application number: 11380002.3
(22) Date of filing: 05.01.2011
(51) Int. Cl.: A23L 3/365, A47J 36/24

(54) **Apparatus and method for the thawing or regeneration of frozen foods**
Vorrichtung und Verfahren zum Auftauen und Regenerieren von gefrorenen Lebensmitteln
Appareil et procédé pour dégeler ou régénérer des aliments congelés

(43) Date of publication of application: 11.07.2012
(73) Proprietor: Electrodomesticos Taurus S.L., 25790 Oliana (Lleida) (ES)
(72) Inventor: Sancho Pastor, Emilio, 25790 Oliana (Lleida) (ES); Alet Vidal, Josep, 25790 Oliana (Lleida) (ES); Trench Roca, Lluis, 25790 Oliana (Lleida) (ES)
(74) Representative: Torner Lasalle, Elisabet

(56) References cited:
- EP-A1- 1 215 259
- EP-A2- 1 894 504
- US-A- 4 777 930
- US-A1- 2003 015 811
- US-A1- 2006 196 497
- US-A1- 2008 251 063
- DATABASE WPI Week 199318 Thomson Scientific, London, GB; AN 1993-150311 XP002642634, & SU 1 733 461 A1 (AS USSR HIGH TEMP INST) 15 May 1992 (1992-05-15)

## Description

### Field of the Art

The present invention relates to an apparatus and a method envisaged for defrosting or regenerating frozen foods.

In the present description, "regenerating frozen foods" will be understood as heating a pre-prepared and frozen food to a temperature suitable to be served and consumed without the need for subsequent cooking. The apparatus of the present invention is especially useful for regenerating food referred to as "fifth range food products", which are dishes that are prepared, packaged and frozen at low temperatures after subjecting them to sanitation processes assuring their salubrious consumption, texture and other original organoleptic qualities.

### Background of the Invention

Patent GB-A-1078593 discloses a method and an apparatus for defrosting foods. The apparatus comprises a tank filled with a hot liquid, such as water or brine, or another equivalent liquid, means for swinging the tank for the purpose of stirring the liquid, and means controlled by thermostat for introducing hot liquid into different sites of the tank for maintaining the liquid of the tank at a desired temperature. The method comprises putting the frozen foods in the hot liquid bath, stirring the hot liquid and maintaining the food in a semi-floating state, allowing them to rotate freely.

One drawback of the mentioned patent GB-A-1078593 is that the boiling temperature of a water-based liquid is around 100°C, and it is a significantly low temperature in comparison to the temperatures recommended for a rapid defrosting or regeneration of foods. Another drawback is that the hot liquid bath produces undesirable vapor seepage to the atmosphere, which means replenishing the evaporated liquid is necessary.

Patent US-A-5368093 discloses a device for defrosting foods comprising a bag filled with a high thermal conductivity fluid which includes a mixture of graphitic carbon particles and water and a plate also made of graphitic carbon. The bag and the plate are first heated, and the food to be defrosted is placed on the plate and covered with the bag which adapts to the shape of the food. The heat of the environment and that of bag and plate is transferred to the food to defrost it. A drawback of this device is that the bag and the plate do not assure complete contact and envelopment of the food to be defrosted due to the low adaptability of the bag and plate to the shape of the food, and the device may not be efficient enough for food regeneration.

Patent US-A-4777930 describes a bag made of a heat-conductive material filled with a heat storage substance, which is preheated and arranged on the base of a container within which a food is placed. The heat is transferred from the substance contained in the bag to the food for the purpose of maintaining the food at a desired temperature. The bag and the container are disposable once the food is consumed. The following are proposed as examples of the mentioned substance: salt hydrates, organic compounds with and without paraffin, such as lauric acid, naphthalene, glycols, and the like. This device does not defrost or regenerate food and would not be suitable for doing so because the temperature of the pre-heated bag is relatively low and there is not complete contact and envelopment of the bag with the food.

Document US 2003/015811 A1 discloses an apparatus comprising a foam filled with acetic acid to thaw meat. The foam is capped with an aluminum plate and the meat is placed on top.

Document EP 1894504 A2 discloses an apparatus to warm food, which could be considered also suitable for thawing food. The apparatus comprises a first compartment for receiving the food to be warmed and a second compartment where a phase-change heat-carrying material which is inductively heated to a relatively high temperature is located.

Document US 2008/0251063 A1 discloses a rechargeable self-heating food container including a cylinder containing a supersaturated salt sealingly insertable into a food container containing a liquid food, with a trigger in fluid contact with the salt solution.

### Disclosure of the Invention

The present invention contributes to palliate the above and other drawbacks by providing an apparatus for defrosting or regenerating frozen foods which comprises a container partially filled with a heat-carrying material which is heated to a predetermined temperature, said container having an opening through which a frozen food, generally placed inside a packaging, is contacted with said heat-carrying material for allowing heat transfer from the heat-carrying material to the frozen food for defrosting or regenerating it. According to the proposal of this invention the mentioned heat-carrying material is a material which is in a solid state at room temperature and which changes from the solid state to a liquid or fluid state at a temperature higher than 125°C, thus allowing immersing the frozen food in said liquid or fluid.

A salt selected from a group comprising sodium nitrate NaNO₃ or sodium nitrite NaNO₂ to which additives, particularly other salts, are generally added, is proposed to be used as the heat-carrying material functioning according to the above assumptions for assuring food compatibility thereof (sodium nitrate, referred to as E251, also known as Chile saltpeter, is used today as a preservative in the food industry) and neutralizing the reactivity and/or inflammability thereof.

In the case of sodium nitrate, said material melts at a temperature of 307°C and its boiling does not occur until 653°C, therefore a wide operating range above 300°C is provided between the melting temperature and the boiling temperature. Sodium nitrite melts at a lower temperature, 270°C, and its boiling (not desired for a normal functioning of the apparatus) occurs at 320°C. In this case, a smaller temperature range is provided but it has the possibility of heat transfer from a fluid above 270°C, whereby defrosting or regenerating can be achieved in a very short time period.

The proposed apparatus is associated with heating means which will be detailed in the following examples for heating said solid material and for maintaining the liquid or fluid material in said state for an operating period sufficient for defrosting or regenerating the food.

The apparatus will have for that purpose heat insulating means, for example, an outer coating with a heat-insulating layer and temperature regulating and/or limiting means for assuring that the temperature at which the solid material is heated and the temperature at which the liquid material is maintained is maintained within a predetermined range or does not exceed a determined safety threshold.

To better use the apparatus and taking into account that the heat-carrying material in the liquid state is at high temperatures, holding means for holding the frozen food when the it is introduced into the container or extracted therefrom have been provided and said container also includes a cover provided with one or more openings (which can optionally be blocked for example by thermostatic means or by other known means) through which the frozen food supported on the support of said manual utensil can be introduced and extracted.

The invention also relates to a method for defrosting or regenerating frozen food, of the type which comprises contacting a frozen food with a heat-carrying material heated to a predetermined temperature for allowing heat transfer from said heat-carrying material to said frozen food for defrosting or regenerating it. The proposed method comprises using a material which is in a solid state at room temperature and which changes to a liquid state at a temperature higher than 125°C, such as one of the previously indicated salts, as said heat-carrying material.

As indicated, the method proposes transmitting heat to the frozen food through a packaging or a recipient in which the frozen food is contained, said packaging or recipient being resistant to the temperature of said material in the liquid state.

### Brief Description of the Drawings

The previous and other features and advantages will be more fully understood from the following detailed description of exemplary embodiments with reference to the attached drawings, in which:
Figure 1 is a side elevation sectional view of an apparatus for defrosting or regenerating frozen foods according to a first embodiment of the present invention, illustrating a container filled with a material which is in a solid state at room temperature (illustrated situation).
Figure 2 corresponds to the apparatus shown in the preceding view but now illustrating the material of the container in a liquid or fluid state (as a consequence of being heated above a determined threshold, as explained), and the arrangement of a food to be defrosted or regenerated therein;
Figure 3 is a side elevation sectional view of an apparatus for defrosting or regenerating frozen foods according to a second embodiment of the present invention;
Figure 4 is a side elevation sectional view of an apparatus for defrosting or regenerating frozen foods according to a third embodiment of the present invention;
Figure 5 is a plan view of an apparatus for defrosting or regenerating frozen foods according to a fourth embodiment of the present invention;
Figure 6 is a side elevation sectional view of an apparatus for defrosting or regenerating frozen foods according to a fifth embodiment of the present invention;

### Detailed Description of Exemplary Embodiments

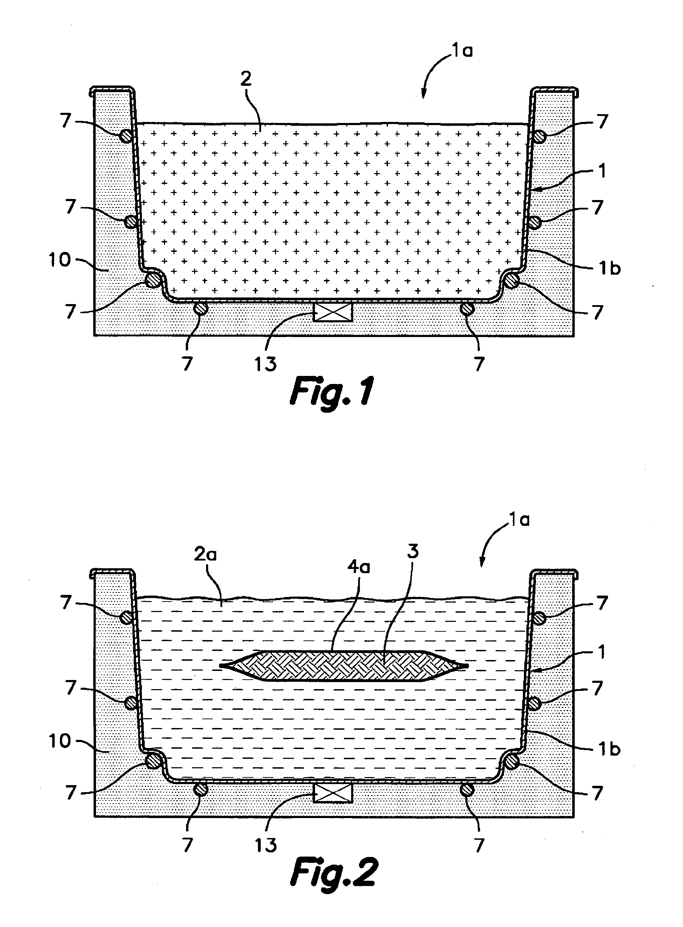

Referring first to Figures 1 and 2, there is shown an apparatus for defrosting or regenerating frozen foods according to a first embodiment of the present invention which comprises a container 1 having a surrounding wall 1b with an upper opening 1a. Said container 1 is partially filled with a heat-carrying material or substance in the form of a solid material 2 (Figure 1) at room temperature and which changes from solid to liquid state 2a (Figure 2) at a temperature higher than 125°C. During the state transition, the material adopts a semi-fluid state before finally being converted into liquid and thus allowing immersing therein the food 3 to be defrosted or regenerated, arranged in a protective packaging 4a so as to not come into contact with the substance.

In this first embodiment, the container 1 is associated with heating means for heating the solid material 2 within the container 1 and for maintaining said material 2a in the liquid state for enough time so as to achieve the desired defrosting or regenerating of the frozen food or food to be regenerated.

The heating means used comprise one or more electrical resistors 7 located outside the container 1 and adjacent to the wall 1b thereof. The electrical resistors 7 are controlled by temperature regulating means preferably including a thermostat 13 or the like for regulating the temperature at which the solid material 2 is heated. Preferably, the wall 1b of the container 1 is externally coated with a heat-insulating layer 10 to avoid as much as possible the heat accumulated in the solid material being dissipated to the atmosphere through the wall 1b.

When the solid material 2 has been heated to a predetermined working temperature, which is comprised between 270°C and 300°C (values suitable for the salts indicated as examples of material or substance to be used, although in the case of NaN0₃ the upper threshold can reach 400 or 450°C) the material acquires a liquid state 2a and a frozen food 3 can be introduced into the container 1 through the opening 1a and is completely submerged in the fluid material 2a, as shown in Figure 2. Said fluid material (heated by the electrical resistors 7) allows immersing the frozen food 3 and assures an adaptation of the fluid material 2a to the shape of the frozen food 3 by contact. Thus, the heat accumulated in the fluid material 2a is rapidly and efficiently transferred to the frozen food 3 for defrosting or regenerating it in a short time.

It should be noted that since the fluid material is at a temperature higher than 270°C, in the indicated examples, a very high heat transfer performance, much higher than that derived from using other liquids according to the state of the art, is achieved.

The frozen food 3, which can be, for example, a food of the so-called fifth range food products, is generally contained in a generally flexible and hermetically-sealed packaging 4a resistant to the working temperature, such that the fluid material 2a is adapted for transmitting heat to the frozen food 3 through said packaging 4a.

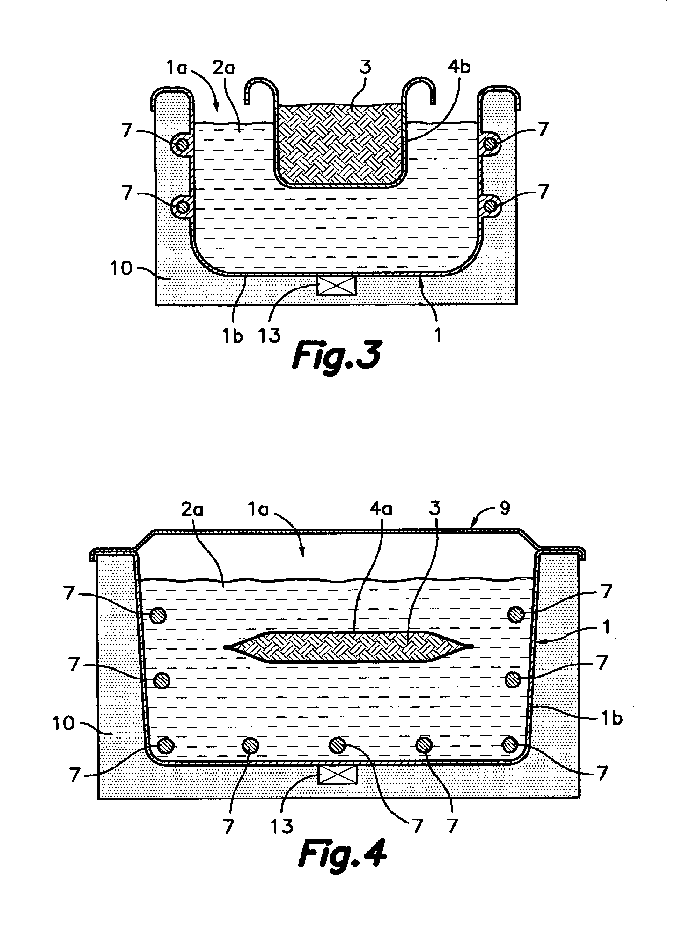

Figure 3 shows an apparatus for defrosting or regenerating frozen foods according to a second embodiment of the present invention which is entirely similar to the apparatus of the first embodiment shown in Figure 1 except that in this embodiment the electrical resistors 7 are embedded in the wall 1b of the container 1.

The illustration of the apparatus according to the second embodiment shown in Figure 2 also serves to show an alternative way of contacting the frozen food 3 with the solid material. As can be observed in the example of Figure 3, the frozen food 3 is contained in a recipient 4b resistant to the working temperature, which is generally rigid and can optionally be opened at the upper part. In this case, the mentioned recipient 4b is partially submerged in the fluid material 2a, such as in a "water bath", such that the fluid material 2a does not come into direct contact with the food even though the recipient 4b is open at the upper part. The fluid material 2a is obviously adapted for transmitting heat to the frozen food 3 through the wall of the recipient 4b.

Figure 4 shows an apparatus for defrosting or regenerating frozen foods according to a third embodiment of the present invention which is entirely similar to the apparatus of the first embodiment shown in Figure 1 except that in this embodiment the electrical resistors 7 are located within the wall 1b of the container 1 and in direct contact with the solid material 2 or fluid material 2a (when it is heated above a threshold temperature). The apparatus according to this third embodiment further includes a cover 9 that can be used for covering the container 1 when the apparatus is not being used or while the frozen food 3a is submerged in the fluid material 2a.

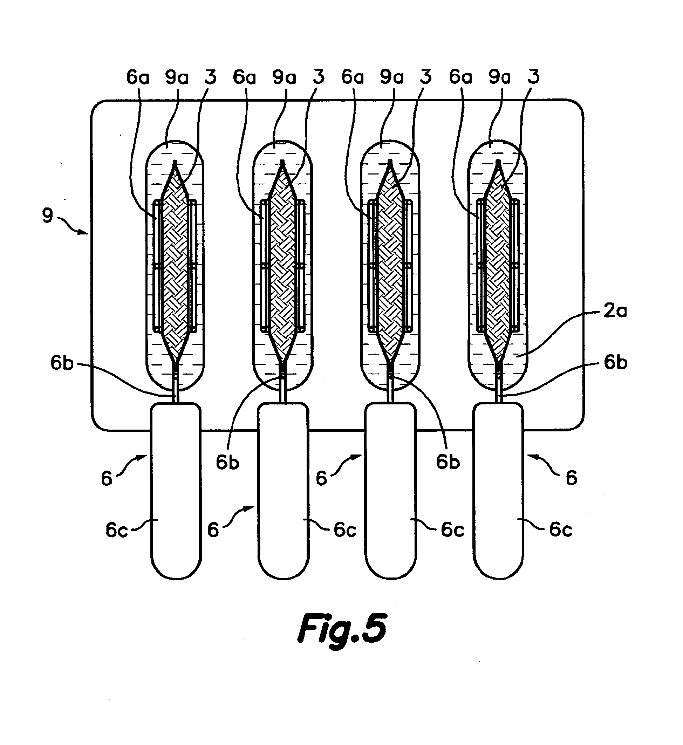

Figure 5 shows a fourth embodiment of the apparatus of the present invention which comprises a container 1 (not shown) partially filled with the solid material 2 or fluid material 2a when it is heated to a predetermined working temperature, and holding means for holding the frozen food 3 when it is introduced into the container 1 or extracted therefrom.

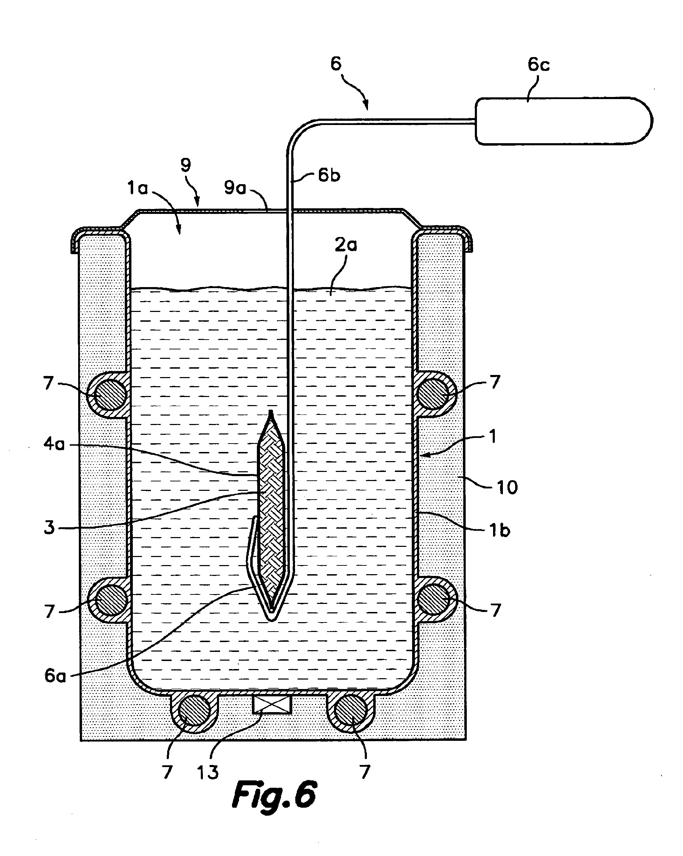

In this fourth embodiment, the mentioned holding means comprise a plurality of manual utensils 6 that are used by a user to support the frozen food 3 while it is submerged, maintained in contact with and extracted from the liquid material 2a, which is at a high temperature, without the user's hands coming into contact with the liquid material 2a. Each of said manual utensils 6 (see also Figure 6) comprises a support 6a fixed at the end of a shaft 6b provided with a heat-insulating handle 6c. The mentioned shaft 6b is long enough so as to allow the frozen food 3 supported on said support 6a to be completely submerged in the liquid material 2a while said handle 6c remains outside the container 1. The support 6a is made of thin rods or similar elements to allow the discrete elements forming the liquid material 2a to flow through it.

The apparatus of the fourth embodiment shown in Figure 5 optionally includes a cover 9 for covering the recipient 1 which is provided with several openings 9a through which various frozen foods 3 supported on the supports 6a of respective manual utensils 6 can be independently introduced and extracted, which avoids having to remove and replace the cover 9 every time a frozen food 3 contained in a packaging 4a is to be defrosted or regenerated.

The invention may incorporate different safety element and particularly means for limiting the access (for example by means of a thermostatic device) through said openings 9a of the cover, blocking it, until the heat-carrying material 2 is in said liquid or fluid 2a state,.

Figure 6 shows a fifth embodiment of the apparatus of the present invention which, similarly to the apparatus of the second embodiment shown in Figure 3, has electrical resistors 7 embedded in the wall 1b of the container 1. The apparatus of this fifth embodiment includes a manual utensil 6 similar to that described above in relation to the fourth embodiment shown in Figure 4, and a cover 9 provided with an opening 9a through which the frozen food 3 supported on the support 6a of the manual utensil 6 can be introduced and extracted

## Claims

1. An apparatus for defrosting or regenerating frozen foods, comprising a container (1) partially filled with a heat-carrying material (2) heated to a predetermined temperature, said container (1) having an opening (1a) through which a frozen food (3) is contacted with said heat-carrying material (2) for allowing heat transfer from the heat-carrying material (2) to said frozen food (3) for defrosting or regenerating it, **characterized in that** said heat-carrying material is a material which is in a solid state (2) at room temperature and which changes from the solid state to a liquid state (2a) at a temperature higher than 125°C, allowing immersing the frozen food in said liquid (2a).

2. The apparatus according to claim 1, **characterized in that** said heat-carrying material (2) is a salt selected from a group comprising sodium nitrate NaNO₃ or sodium nitrite NaNO₂.

3. The apparatus according to claim 1, **characterized in that** said container (1) is associated with heating means for heating said solid material (2) and for maintaining the liquid material (2a) in said liquid state for an operating period sufficient for said defrosting or regenerating.

4. The apparatus according to claim 3, **characterized in that** said heating means are provided for heating the solid material (2) and maintaining the liquid material (2a) within the container (1) which is externally coated with a heat-insulating layer (10).

5. The apparatus according to claim 3 or 4, **characterized in that** said heating means comprise one or more electrical resistors (7) located outside the container (1) and adjacent to a wall (1b) thereof.

6. The apparatus according to claim 3 or 4, **characterized in that** said heating means comprise one or more electrical resistors (7) embedded in a wall (1b) of the container (1).

7. The apparatus according to claim 3 or 4, **characterized in that** said heating means comprise one or more electrical resistors (7) located within the container (1).

8. The apparatus according to claim 3 or 4, **characterized in that** it comprises temperature regulating and/or limiting means for assuring that the temperature at which the solid material (2) is heated and the temperature at which the liquid material (2a) is maintained, is maintained within a predetermined range or does not exceed a determined threshold.

9. The apparatus according to claim 1, **characterized in that** it further comprises holding means for holding the frozen food (3) when it is introduced into the container (1) or extracted therefrom.

10. The apparatus according to claim 9, **characterized in that** said holding means comprise a manual utensil (6) which includes a support (6a) fixed at the end of a shaft (6b) provided with a heat-insulating handle (6c), said shaft (6b) being long enough so as to allow the frozen food (3) supported on said support (6a) to be completely submerged in the liquid material (2a) while said handle (6c) remains outside the container (1).

11. The apparatus according to claim 1 or 10, **characterized in that** the container (1) includes a cover (9) provided with one or more openings (9a) through which the frozen food (3) supported on the support (6a) of said manual utensil (6) can be introduced and extracted.

12. The apparatus according to claim 11, **characterized in that** it incorporates means for limiting the access through said one or more openings (9a) of the cover, blocking it, until the heat-carrying material (2) is in said liquid state (2a).

13. A method for defrosting or regenerating frozen foods, which comprises contacting a frozen food (3) with a heat-carrying material heated to a predetermined temperature for allowing heat transfer from said heat-carrying material to said frozen food (3) for defrosting or regenerating it, **characterized in that** it comprises using as said heat-carrying material a material which is in a solid state (2) at room temperature and which changes to a liquid state (2a) at a temperature higher than 125°C.

14. The method according to claim 13, **characterized in that** it comprises transmitting heat to the frozen food (3) through a packaging (4a) or a recipient (4b) in which the frozen food (3) is contained, said packaging or recipient being resistant to the temperature of said material in the liquid state (2a).

15. The method according to claim 13, **characterized in that** said heat-carrying material (2) is a salt selected from a group comprising sodium nitrate NaNO₃ or sodium nitrite NaNO₂.

## Patentansprüche

1. Gerät zum Auftauen oder Regenerieren von gefrorenen Lebensmitteln, umfassend einen Behälter (1), welcher teilweise mit einem Wärmeübertragungsmaterial (2) gefüllt ist, das auf eine vorbestimmte Temperatur aufgewärmt wird, wobei der genannte Behälter (1) eine Öffnung (1a) aufweist, durch welche ein gefrorenes Lebensmittel (3) mit dem genannten Wärmeübertragungsmaterial (2) in Kontakt gebracht wird, um einen Wärmeübergang von dem Wärmeübertragungsmaterial (2) zum genannten gefrorenen Lebensmittel (3) für das Auftauen oder Regenerieren desselben zu ermöglichen, **dadurch gekennzeichnet, dass** das genannte Wärmeübertragungsmaterial ein Material ist, welches sich bei Raumtemperatur in festem Zustand (2) befindet und welches vom festen Zustand zu einem flüssigen Zustand (2a) bei einer Temperatur höher als 125°C wechselt, wobei ermöglicht wird, das gefrorene Lebensmittel in die genannte Flüssigkeit (2a) einzutauchen.

2. Gerät nach Anspruch 1, **dadurch gekennzeichnet, dass** das genannte Wärmeübertragungsmaterial (2) ein Salz ist, ausgewählt aus einer Gruppe umfassend Natriumnitrat NaNO₃ oder Natriumnitrit NaNO₂.

3. Gerät nach Anspruch 1, **dadurch gekennzeichnet, dass** der genannte Behälter (1) mit Aufwärmemitteln verbunden ist, um das genannte feste Material (2) aufzuwärmen und um das flüssige Material (2a) im genannten flüssigen Zustand während einer Betriebsdauer, die für das genannte Auftauen oder Regenerieren genügt, zu halten.

4. Gerät nach Anspruch 3, **dadurch gekennzeichnet, dass** die genannten Aufwärmemittel dazu vorgesehen sind, das feste Material (2) aufzuwärmen und das flüssige Material (2a) innerhalb des Behälters (1) zu halten, welcher außen mit einer wärmeisolierenden Schicht (10) ummantelt ist.

5. Gerät nach Anspruch 3 oder 4, **dadurch gekennzeichnet, dass** die genannten Aufwärmemittel einen elektrischen Widerstand oder mehrere elektrische Widerstände (7) umfassen, welcher/welche sich außerhalb des Behälters (1) befindet/befinden und mit einer Wand (1 b) desselben angrenzt/angrenzen.

6. Gerät nach Anspruch 3 oder 4, **dadurch gekennzeichnet, dass** die genannten Aufwärmemittel einen elektrischen Widerstand oder mehrere elektrische Widerstände (7) umfassen, welcher/welche in einer Wand (1 b) des Behälters (1) eingebaut ist/sind.

7. Gerät nach Anspruch 3 oder 4, **dadurch gekennzeichnet, dass** die genannten Aufwärmemittel einen elektrischen Widerstand oder mehrere elektrische Widerstände (7) umfassen, welcher/welche sich innerhalb des Behälters (1) befindet/befinden.

8. Gerät nach Anspruch 3 oder 4, **dadurch gekennzeichnet, dass** es Mittel für die Regelung und/oder Begrenzung der Temperatur umfasst, um zu gewährleisten, dass die Temperatur, auf welche das feste Material (2) aufgewärmt wird und die Temperatur, auf welcher das flüssige Material (2a) gehalten wird, in einem vorbestimmten Bereich gehalten wird oder einen bestimmten Grenzwert nicht übersteigt.

9. Gerät nach Anspruch 1, **dadurch gekennzeichnet, dass** es zusätzlich Haltemittel umfasst, welche das gefrorene Lebensmittel (3) halten, wenn es in den Behälter (1) eingeführt oder aus diesem herausgenommen wird.

10. Gerät nach Anspruch 9, **dadurch gekennzeichnet, dass** die genannten Haltemittel eine manuelle Einrichtung (6) umfassen, welche einen Träger (6a) aufweist, der an dem Ende einer Welle (6b) befestigt ist, welche mit einem wärmeisolierenden Griff (6c) versehen ist, wobei die genannte Welle (6b) lang genug ist um zu ermöglichen, dass das gefrorene, auf dem genannten Träger (6a) getragene Lebensmittel (3) vollständig in das flüssige Material (2a) eingetaucht wird, während der genannte Griff (6c) außerhalb des Behälters (1) bleibt.

11. Gerät nach Anspruch 1 oder 10, **dadurch gekennzeichnet, dass** der Behälter (1) einen Deckel (9) aufweist, welcher mit einer Öffnung oder mit mehreren Öffnungen (9a) versehen ist, durch welche das gefrorene, auf dem genannten Träger (6a) getragene Lebensmittel (3) der genannten manuellen Einrichtung (6) eingeführt und herausgenommen werden kann.

12. Gerät nach Anspruch 11, **dadurch gekennzeichnet, dass** es Mittel aufweist, um den Zugang durch die genannte eine Öffnung oder die genannten mehreren Öffnungen (9a) des Deckels zu begrenzen, indem dieser blockiert wird, bis sich das Wärmeübertragungsmaterial (2) in dem genannten flüssigen Zustand (2a) befindet.

13. Verfahren zum Auftauen oder Regenerieren von gefrorenen Lebensmitteln, umfassend das in Kontakt Bringen von einem gefrorenen Lebensmittel (3) mit einem Wärmeübertragungsmaterial, das auf eine vorbestimmte Temperatur aufgewärmt wird, um einen Wärmeübergang von dem genannten Wärmeübertragungsmaterial zum genannten gefrorenen Lebensmittel (3) für das Auftauen oder Regenerieren desselben zu ermöglichen, **dadurch gekennzeichnet, dass** es als Wärmeübertragungsmaterial die Verwendung eines Materials umfasst, welches sich bei Raumtemperatur in festem Zustand (2) befindet und welches zu einem flüssigen Zustand (2a) bei einer Temperatur höher als 125°C wechselt.

14. Verfahren nach Anspruch 13, **dadurch gekennzeichnet, dass** es die Übertragung von Wärme zum gefrorenen Lebensmittel (3) durch eine Verpackung (4a) oder ein Gefäß (4b) umfasst, in welcher/welchem das gefrorene Lebensmittel (3) enthalten ist, wobei die Verpackung oder das Gefäß gegenüber der Temperatur des genannten Materials im flüssigen Zustand (2a) widerstandsfähig ist.

15. Verfahren nach Anspruch 13, **dadurch gekennzeichnet, dass** das genannte Wärmeübertragungsmaterial (2) ein Salz ist, ausgewählt aus einer Gruppe umfassend Natriumnitrat NaNO₃ oder Natriumnitrit NaNO₂.

## Revendications

1. Un appareil pour décongeler ou régénérer des aliments congelés, comportant une caisse (1) partiellement remplie d'un matériau caloporteur (2) chauffé à une température prédéterminée, cette caisse (1) ayant une ouverture (1a) à travers laquelle un aliment congelé (3) entre en contact avec ce matériau caloporteur (2) pour permettre le transfert de chaleur du matériau caloporteur (2) à cet aliment congelé (3) pour le décongeler ou régénérer, **caractérisé en ce que** ce matériau caloporteur est un matériau qui se trouve à l'état solide (2) à température ambiante et qui change de l'état solide à l'état liquide (2a) à une température supérieure à 125°C, permettant l'immersion de l'aliment congelé dans ce liquide (2a).

2. L'appareil conformément à la revendication 1, **caractérisé en ce que** ce matériau caloporteur (2) est un sel sélectionné d'un groupe comprenant le nitrate de sodium NaNO₃ ou le nitrite de sodium NaNO₂.

3. L'appareil conformément à la revendication 1, **caractérisé en ce que** cette caisse (1) est associée à des moyens chauffants pour chauffer ce matériau solide (2) et pour maintenir le matériau liquide (2a) dans cet état liquide pendant une période de travail suffisante pour cette décongélation ou régénération.

4. L'appareil conformément à la revendication 3, **caractérisé en ce que** ces moyens chauffants sont destinés à chauffer le matériau solide (2) et à maintenir le matériau liquide (2a) à l'intérieur de la caisse (1) qui est revêtue à l'extérieur d'une couche d'isolement thermique (10).

5. L'appareil conformément à la revendication 3 ou 4, **caractérisé en ce que** ces moyens chauffants comportent une ou plusieurs résistance électriques (7) situées à l'extérieur de la caisse (1) et adjacentes à une de ses parois (1 b).

6. L'appareil conformément à la revendication 3 ou 4, **caractérisé en ce que** ces moyens chauffants comportent une ou plusieurs résistances électriques (7) intégrées dans une paroi (1 b) de la caisse (1).

7. L'appareil conformément à la revendication 3 ou 4, **caractérisé en ce que** ces moyens chauffants comportent une ou plusieurs résistances électriques (7) situées à l'intérieur de la caisse (1).

8. L'appareil conformément à la revendication 3 ou 4, **caractérisé en ce qu'**il comporte des moyens de régulation et/ou de limitation de la température pour assurer que la température à laquelle le matériau solide (2) est chauffé et la température à laquelle le matériau liquide (2a) est maintenue, est conservée dans une gamme prédéterminée ou ne dépasse pas un seuil prédéterminé.

9. L'appareil conformément à la revendication 1, **caractérisé en ce que** de plus il comporte des moyens de fixation pour fixer l'aliment congelé (3) quand il est introduit dans la caisse (1) ou en est retiré.

10. L'appareil conformément à la revendication 9, **caractérisé en ce que** ces moyens de fixation comportent un ustensile manuel (6) comprenant un support (6a) fixé à l'extrémité d'un arbre (6b) pourvu d'un manche thermiquement isolant (6c), cet arbre (6b) étant suffisamment long pour permettre que l'aliment congelé (3) supporté sur ce support (6a) soit complètement submergé dans le matériau liquide (2a) pendant que ce manche (6c) reste à l'extérieur de la caisse (1).

11. L'appareil conformément à la revendication 1 ou 10, **caractérisé en ce que** la caisse (1) comprend un couvercle (9) pourvu d'une ou plusieurs ouvertures (9a) à travers lesquelles l'aliment congelé (3) supporté sur le support (6a) de cet ustensile manuel (6) peut y être introduit et retiré.

12. L'appareil conformément à la revendication 11, **caractérisé en ce qu'**il incorpore des moyens pour limiter l'accès à travers ces une ou plusieurs ouvertures (9a) du couvercle, en le bloquant, jusqu'à ce que le matériau caloporteur (2) sera dans cet état liquide (2a).

13. Une méthode pour décongeler ou régénérer des aliments congelés, comportant la mise en contact d'un aliment congelé (3) avec un matériau caloporteur chauffé à une température prédéterminée pour permettre le transfert de chaleur de ce matériau caloporteur à cet aliment congelé (3) pour le décongeler ou le régénérer, **caractérisée en ce qu'**il comporte l'utilisation comme matériau caloporteur d'un matériau qui se trouve à l'état solide (2) à température ambiante et qui passe à un état liquide (2a) à une température supérieur à 125°C.

14. La méthode conformément à la revendication 13, **caractérisée en ce qu'**elle comporte la transmission de chaleur à l'aliment congelé (3) à travers un emballage (4a) ou un récipient (4b) dans lequel se trouve l'aliment congelé (3), cet emballage ou récipient étant résistant à la température de ce matériau à l'état liquide (2a).

15. La méthode conformément à la revendication 13, **caractérisée en ce que** ce matériau caloporteur (2) est un sel sélectionné d'un groupe comprenant le nitrate de sodium NaNO₃ ou le nitrite de sodium NaNO₂.
